# EUROPEAN PATENT SPECIFICATION

(11) **EP 3 843 467 B1**
(45) Date of publication and mention of the grant of the patent: **10.04.2024**
(21) Application number: 19917295.8
(22) Date of filing: 27.02.2019
(51) Int. Cl.: H04W 56/00, H04W 8/18, H04W 4/80, H04W 4/08, H04W 76/11, H04L 67/1095

(54) **WIRELESS CONNECTION METHOD, DEVICE GROUP, SYSTEM, AND STORAGE MEDIUM**
DRAHTLOSES VERBINDUNGSVERFAHREN, GERÄTEGRUPPE, SYSTEM UND SPEICHERMEDIUM
PROCÉDÉ DE CONNEXION SANS FIL, ENSEMBLE D'INSTRUMENTS, SYSTÈME, ET SUPPORT DE DONNÉES

(43) Date of publication of application: 30.06.2021
(73) Proprietor: Spreadtrum Communications (Shanghai) Co., Ltd., Shanghai 201203 (CN)
(72) Inventor: CHEN, Guochu, Shanghai 201203 (CN)
(74) Representative: Finnegan Europe LLP
(86) International application number: PCT/CN2019/076375
(87) International publication number: WO 2020/172830

(56) References cited:
- CN-A- 102 638 774
- CN-A- 104 488 199
- JP-A- 2016 212 656
- US-A1- 2006 252 443
- US-A1- 2015 373 510

## Description

### TECHNICAL FIELD

The present invention relates to the field of electronic technology, particularly to a wireless connection method, a device group, a system and a storage medium.

### BACKGROUND ART

In a data transceiving device system of wireless devices, data exchange between a data source device and different forms of wireless transceiving devices can be realized.

Currently, with the increase of user demand, the wireless transceiving devices connected to a data source device have gradually shifted from a single wireless transceiving device to double wireless transceiving devices or even multiple wireless transceiving devices. For many application scenarios, the data of the data source device need to be synchronized with a plurality of wireless transceiving devices. For example, data transmission between an audio data source device and a wireless audio device group relates to the issue with music and voice synchronization among the wireless audio devices in the wireless audio device group.

US 2015/373510 discloses a method which may include generating a floor request signaling message to take control of a communication channel for a group. After transmitting data relating to the communications, a floor release signaling message may be generated and transmitted a number of times.

US2006/252443 discloses a method for addressing groups of stations in a wireless communication system begins by assigning the stations in the system into a number of groups. A group identifier is signaled to each station and the group identifier is indicated in a frame for each group that has data in the frame. The addressing method can be applied to power savings for the station, wherein the station enters a power saving mode if the group identifier for the station is not present in the frame.

### SUMMARY OF THE INVENTION

The present invention provides a wireless connection method in accordance with claim 1, a wireless transceiving device group in accordance with claim 9, a wireless transceiving system in accordance with claim 16 and a storage medium in accordance with claim 17. A wireless transceiving device group is established and configured with a device group identifier so that a bidirectional connection is established between an external data source device and the wireless transceiving device group by means of the device group identifier, and data of a data source can be synchronized with the wireless transceiving devices of the wireless transceiving device group by means of the bidirectional connection between the data source device and the wireless transceiving device group, thereby realizing data synchronization of the wireless transceiving devices in the wireless transceiving device group. Further, as the wireless transceiving devices in the wireless transceiving device group realize a bidirectional connection with the data source device by means of a unified device group identifier, the wireless transceiving devices in the wireless transceiving device group have an equal status. When the connection of any wireless transceiving device in the group fails, the communication connection between other wireless transceiving devices in the group and the data source device is not affected. Further, the power consumption of every wireless transceiving device can be more balanced.

### BRIEF DESCRIPTION OF THE DRAWINGS

To describe the technical solutions in the embodiments of the present invention or in the prior art more clearly, the following briefly describes the accompanying drawings needed for describing the embodiments or the prior art. Apparently, the accompanying drawings in the following description show some embodiments of the present invention, and
a person of ordinary skill in the art may still derive other accompanying drawings from these accompanying drawings without creative efforts.
Fig. 1 is a structural schematic view of a wireless transceiving device group provided by an exemplary embodiment of the present invention;
Fig. 2 is a schematic view of an application scenario of a wireless connection method provided by an exemplary embodiment of the present invention;
Fig. 3 is a schematic view of a flow of a wireless connection method provided by an exemplary embodiment of the present invention;
Fig. 4 is a schematic view of a communication scenario of a wireless connection method provided by an exemplary embodiment of the present invention;
Fig. 5 is a schematic view of an alternative communication scenario of a wireless connection method provided by an exemplary embodiment of the present invention;
Fig. 6 is a schematic view of an alternative communication scenario of a wireless connection method provided by an exemplary embodiment of the present invention;
Fig. 7 is a schematic view of a time sequence of data transmission between a wireless transceiving device group and a data source device;
Fig. 8 is a schematic view of device extension of a wireless transceiving device group in a wireless connection method provided by an exemplary embodiment of the present invention;

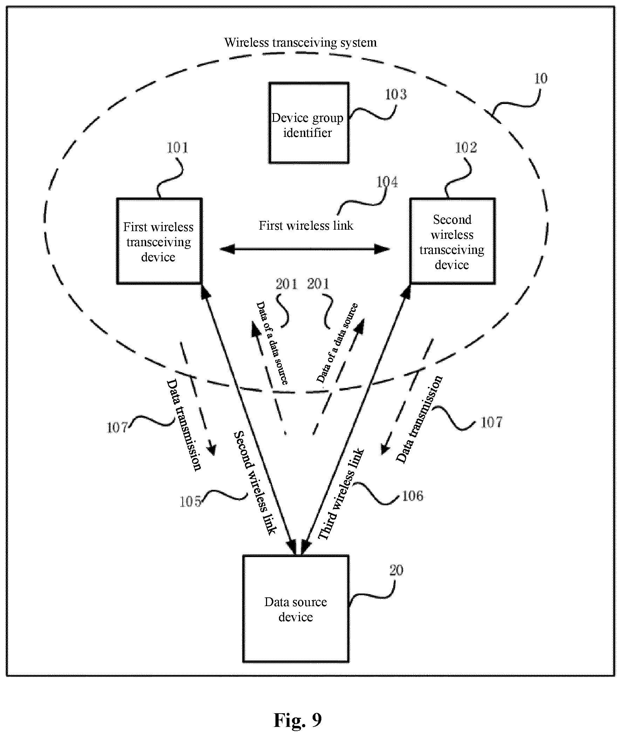

Fig. 9 is a structural schematic view of a wireless connection system provided by an exemplary embodiment of the present invention.

### DETAILED DESCRIPTION

In order to make the object, technical solutions and advantages of the embodiments of the present invention clearer, the technical solutions in the embodiments of the present invention will be described clearly and completely hereinafter in conjunction with the drawings in the embodiments of the present invention. Apparently, the described embodiments are only some of the embodiments of the present invention, rather than all of the embodiments.

The terms "first," "second," "third," "fourth," etc. (if any) in the description, claims and the foregoing accompanying drawings of the present invention are used to distinguish similar objects and are not necessarily used to describe a specific order or sequence. It should be understood that the data used in this way can be interchanged under appropriate circumstances, so that the embodiments of the present invention described herein can be implemented in a sequence other than those illustrated or described herein. Further, terms "comprise" and "have" and any variations thereof are intended to cover non-exclusive inclusions. For example, a process, method, system, product or device comprising a series of steps or units is not necessarily limited to the steps or units that are set forth clearly, but may include other steps or units that are not set forth clearly or are inherent to the process, method, product, or device.

Specific embodiments are used below to describe in detail the technical solutions of the present invention and how the technical solutions of the present application solve the foregoing technical problems. The embodiments of the present invention will be described below in conjunction with the accompanying drawings.

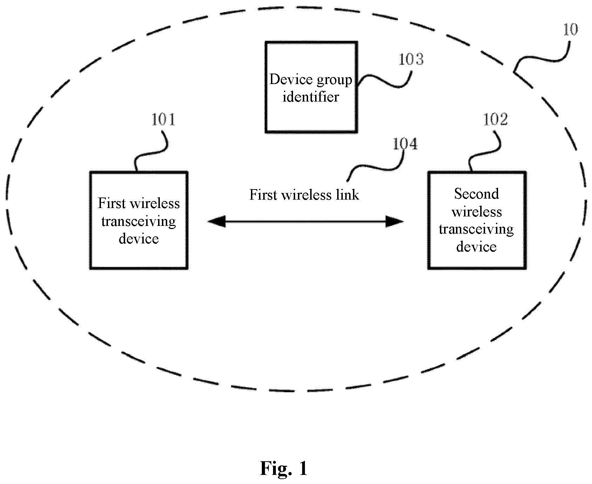

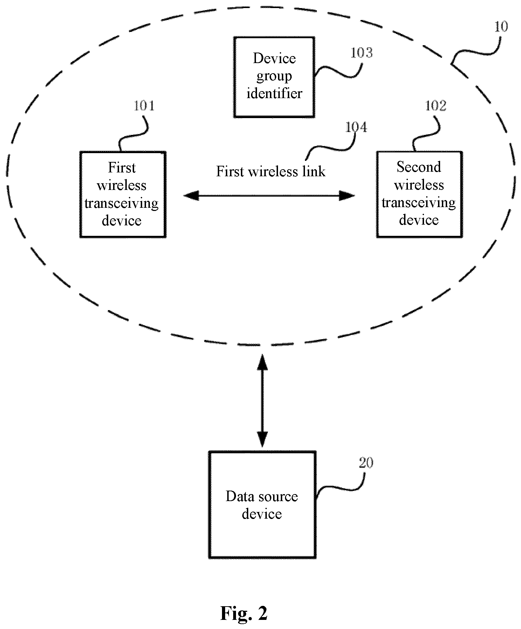

Fig. 1 is a structural schematic view of a wireless transceiving device group provided by an exemplary embodiment of the present invention. Fig. 2 is a schematic view of an application scenario of a wireless connection method provided by an exemplary embodiment of the present invention. As shown in Fig. 1 and Fig. 2, the wireless connection method provided by this embodiment is applied in a wireless transceiving device group 10, wherein the wireless transceiving device group comprises at least two wireless transceiving devices, for example, which can be a first wireless transceiving device 101 and a second wireless transceiving device 102, and communication connection between the wireless transceiving devices in the wireless transceiving device group 10 is implemented by means of a first wireless link 104. It is worth noting that the communication connection between the wireless transceiving devices in the wireless transceiving device group can be bidirectional or unidirectional, which is not specifically limited in this embodiment. Further, it should be understood that for the foregoing wireless transceiving devices that may be communicated according to a standard wireless protocol, the standard wireless protocol may be a Bluetooth protocol or a Wifi protocol. In this embodiment, no limitation is set to specific wireless protocols. In order to specifically describe the application scenarios of the wireless connection method provided in this embodiment, the Bluetooth protocol may be set as an example for the standard wireless protocol. In this case, the wireless transceiving devices are Bluetooth transceiving devices, and more specifically, the wireless transceiving devices may be Bluetooth audio devices, such as Bluetooth headsets and Bluetooth speakers.

To address the foregoing problems in the prior art, the wireless connection method provided in this embodiment establishes a wireless transceiving device group 10 and configures a device group identifier 103 for the wireless transceiving device group 10. It should be understood that the device group identifier 103 is used to identify the wireless transceiving device group 10, wherein the device group identifier 103 may be a communication address, and the device group identifier 103 may be understood as a public physical media access control address (MAC) of the wireless transceiving device group 10, while a bidirectional connection is established between an external data source device 20 and a wireless transceiving device group 10 by means of the device group identifier 103. For example, the bidirectional connection may be a bidirectional connection based on a Bluetooth protocol. Data of a data source can be synchronized with the wireless transceiving devices in the wireless transceiving device group 10 by means of the bidirectional connection between the data source device 20 and the wireless transceiving device group 10, thereby realizing data synchronization of the wireless transceiving devices in the wireless transceiving device group 10. Further, as the wireless transceiving devices in the wireless transceiving device group 10 realize a bidirectional connection with the data source device 20 by means of a unified device group identifier 103, the wireless transceiving devices in the wireless transceiving device group 10 have an equal status. For example, When the connection of any wireless transceiving device in the group fails, the communication connection between other wireless transceiving devices in the group and the data source device is not affected. Further, as the wireless transceiving devices in the group have an equal status, the power consumption of the wireless transceiving devices is also relatively average.

Optionally, a connection between any two wireless transceiving devices in the wireless transceiving device group 10 is implemented by means of a preset physical identifier. For example, a connection between a first wireless transceiving device 101 and a second wireless transceiving device 102 is implemented by means of a physical identifier preset therein. It should be understood that the physical identifier may be a physical address, for example, an MAC address, and the device group identifier and the physical identifier may be used in a time-sharing manner according to a preset air interface protocol.

Following the development of technology, Bluetooth audio devices are gradually being shifted from a single audio device to double audio devices, even multiple audio devices. For example, for Bluetooth headsets, there are currently many forms of Bluetooth headsets in the form of earbud pairs. With reference to Fig. 1, the Bluetooth headsets typically include a first Bluetooth headset and a second headset, which respectively correspond to the first wireless transceiving device and the second wireless transceiving device in this embodiment. Specifically, in the prior art, the Bluetooth headsets in the form of earbud pairs typically have two implementation methods:
In a method, one of the Bluetooth headsets in the form of earbud pairs is selected as a fixed master headset, and the other is a fixed auxiliary headset, wherein the master headset undertakes the communication interaction with the data source device. It can be seen that in this method, the master headset is overloaded and the loads of the master headset and the auxiliary headset are uneven, resulting in easy exhaustion of the power of the master headset.

Alternatively, two of the Bluetooth headsets in the form of earbud pairs both establish a standard Bluetooth connection with a data source device by means of an MAC address, and then the data source device sends data information to the two headsets respectively. It can be seen that in this realization method, the data source device, a smart phone for example, needs to re-transmit data information, which will occupy double Bluetooth time, while in a complex environment, there are not many time slices for retransmission in general, or under a scenario of coexistence of WIFI and Bluetooth for smart phones, there are not many time slices for retransmission, either.

A wireless transceiving device group 10 as Bluetooth headsets in the form of earbud pairs may continue to be used as an example to exemplarily describe the principle of the wireless connection method provided in this embodiment. Two of the Bluetooth headsets in the form of earbud pairs may be used to establish a wireless transceiving device group, and distributed with a unified device group identifier, wherein the step of two of the Bluetooth headsets in the form of earbud pairs establishing a wireless transceiving device group may be completed when the headsets leave the factory and are paired, or may be completed by the user by means of a subsequent pairing device, while the device group identifier may be generated according to the core specification of Bluetooth, wherein the method of generating a Bluetooth communication address according to the core specification of Bluetooth is a conventional technical means in the art and will not be described again in this embodiment. Further, the device group identifier may also be generated according to the actual demand and other specifications. In this embodiment, the rule for generating a device group identifier is not limited. When the Bluetooth headsets are connected to a smart terminal, such as a smart phone, MP3, a notebook and any Bluetooth data source device that can be used as a sound source, the smart phone sends audio data to the device group identifier during synchronization of music, while two of the Bluetooth headsets may obtain audio data by respectively monitoring the audio link between a smart phone and the device group identifier. Compared with the prior art, two of the Bluetooth headsets, which have applied the method in this embodiment, have similar loads and the power consumption is more average, and for the data source device, multiple data transmission is not needed. Further, the form of establishing a wireless transceiving device group at first and then distributing a unified device group identifier for the wireless transceiving device group may cause two of the Bluetooth headsets in the form of earbud pairs to have an equal status. For example, when the connection of any wireless transceiving device in the group fails, the communication connection between another Bluetooth headset and the data source device will not be affected, and further, the wireless transceiving device group may have better device extendability. For example, according to different scenarios, the present form of two headsets forming a group can be extended to the form of more headsets forming a group. It can be understood that in this embodiment, the number of the wireless transceiving devices included in the wireless transceiving device group 10 is not limited. Further, as the wireless transceiving devices in the wireless transceiving device group 10 realize a bidirectional connection with the data source device 20 by means of a unified device group identifier 103, the wireless transceiving devices in the wireless transceiving device group 10 have an equal status. For example, when the connection of any wireless transceiving device in the group fails, the communication connection between other wireless transceiving devices in the group and the data source device is not affected. Further, as the wireless transceiving devices in the group have an equal status, the power consumption of the wireless transceiving devices is also relatively average.

Further, the wireless transceiving device group 10 may also be paired with a Bluetooth speaker of which implementation principle is similar to that of the foregoing Bluetooth headsets in the form of earbud pairs, and is not described again in this embodiment.

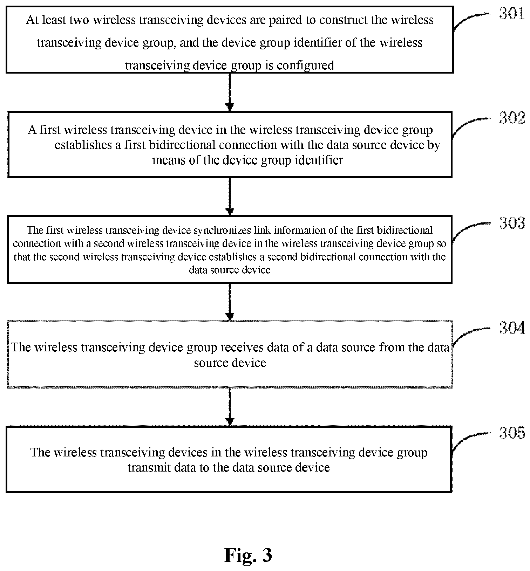

Fig. 3 is a schematic view of a flow of a wireless connection method provided by an exemplary embodiment of the present invention. As shown in Fig. 3, the wireless connection method provided by this embodiment comprises:
Step 301: At least two wireless transceiving devices are paired to construct a wireless transceiving device group, and a device group identifier of the wireless transceiving device group is configured.

Specifically, a plurality of wireless transceiving devices may be paired at the time of leaving the factory to construct a wireless transceiving device group, or may be paired by the user by means of a subsequent pairing device. It should be understood that the method for constructing a wireless transceiving device group is not limited in this embodiment as long as a device group identifier can be configured for the wireless transceiving device group after the pairing and the device group identifier can be used to establish a bidirectional connection with an external data source device. In a possible realization method, the foregoing device group identifier may be a communication address, or may be a device group identifier of the wireless transceiving device group configured according to a preset addressing rule.

Taking Bluetooth headsets in the form of earbud pairs for example, two of the Bluetooth headsets in the form of earbud pairs may establish a wireless transceiving device group, wherein the step of two of the Bluetooth headsets in the form of earbud pairs establishing a wireless transceiving device group may be completed during pairing when the headsets leave the factory, or may be completed by the user by means of a subsequent pairing device, while the device group identifier may be generated according to the core specification of Bluetooth. The method of generating a Bluetooth communication address according to the core specification of Bluetooth is a conventional technical means in the art and will not be described again in this embodiment. Further, the device group identifier may also be generated according to the actual demand and other specifications. In this embodiment, the rule for generating a device group identifier is not limited.

Further, after establishment of a wireless transceiving device group, the wireless transceiving devices of the wireless transceiving device group may also store a device group identifier respectively.

Step 302: A first wireless transceiving device in the wireless transceiving device group establishes a first bidirectional connection with the data source device by means of the device group identifier.

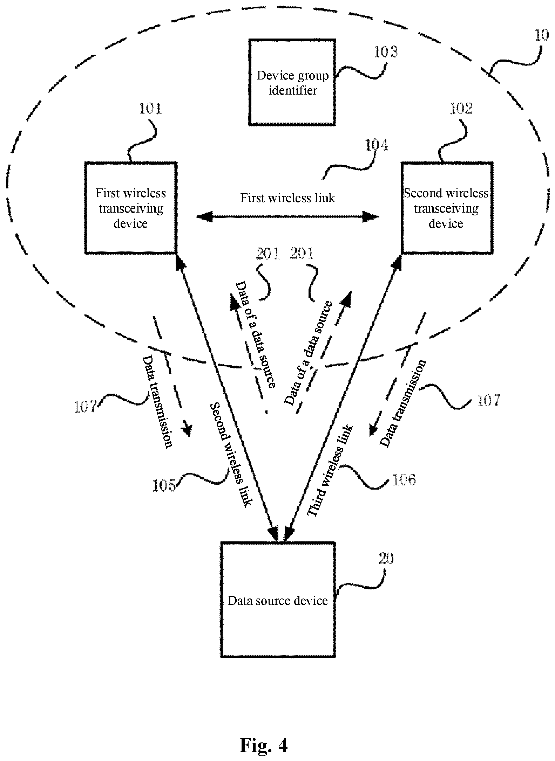

After formation of the wireless transceiving device group, the data source device may establish a connection with the wireless transceiving device group by means of obtaining a device group identifier. Fig. 4 is a schematic view of a communication scenario of a wireless connection method provided by an exemplary embodiment of the present invention. As shown in Fig. 4, the wireless transceiving devices in a wireless transceiving device group 10 have stored a device group identifier 103. In the specific connection process, a first bidirectional connection with a data source device 20 is established at first by means of one of the wireless transceiving devices in the wireless transceiving device group 10, a first wireless transceiving device 101 for example. In other words, the first wireless transceiving device 101 in the wireless transceiving device group 10 performs bidirectional data transmission with the data source device 20 by means of a second wireless line 105 based on a device group identifier 103. It should be understood that the first wireless transceiving device 101 in the wireless transceiving device group 10 first selected to establish a connection with the data source device 20 may be determined according to the current status of every wireless transceiving device in the group. For example, a wireless transceiving device with the most power may be selected, or a wireless transceiving device with the strongest signal intensity may be selected. In this embodiment, the principle for selecting a wireless transceiving device that first establishes a connection with the data source device is not limited.

Bluetooth headsets in the form of earbud pairs may be taken as an example for description. After two Bluetooth headsets form Bluetooth headsets in the form of earbud pairs, a smart terminal may establish a connection with the Bluetooth headsets in the form of earbud pairs by means of obtaining a device group identifier. The Bluetooth headsets in the form of earbud pairs have stored a device group identifier. In a specific connection, a first bidirectional connection with a digital smart terminal is first established by means of one of the Bluetooth headsets in the form of earbud pairs, a first Bluetooth headset for example. In other words, a first Bluetooth headset in the Bluetooth headsets in the form of earbud pairs performs bidirectional data transmission with a smart terminal by means of a second wireless link based on a device group identifier. It should be understood that the first Bluetooth headset in the Bluetooth headsets in the form of earbud pairs first selected to establish a connection with the smart terminal may be determined according to the current status of every Bluetooth headset in the group. For example, a Bluetooth headset with the most power may be selected, or a Bluetooth headset with the strongest signal intensity may be selected. In this embodiment, the principle for selecting a Bluetooth headset that first establishes a connection with the smart terminal is not limited.

Step 303: The first wireless transceiving device synchronizes link information of the first bidirectional connection with a second wireless transceiving device in the wireless transceiving device group so that the second wireless transceiving device establishes a second bidirectional connection with the data source device.

After a first wireless transceiving device 101 establishes a first bidirectional connection with a data source device 20 through a device group identifier 103, the link information of the first bidirectional connection may further be synchronized with a second wireless transceiving device 102 in the wireless transceiving device group 10 by means of a first wireless link 104 so that the second wireless transceiving device 102 establishes a second bidirectional connection with the data source device. That is to say, the second wireless transceiving device 102 in the wireless transceiving device group 10 performs bidirectional data transmission with the data source device 20 by means of a third wireless link 106 based on the device group identifier 103.

The Bluetooth headsets in the form of earbud pairs may continue to be taken as an example for description. After the first Bluetooth headset establishes a first bidirectional connection with a smart terminal by means of a device group identifier, the link information of the first bidirectional connection may further be synchronized with a second Bluetooth headset in the Bluetooth headsets in the form of earbud pairs by means of a first wireless link, so that the second Bluetooth headset establishes a second bidirectional connection with the smart terminal, that is, the second Bluetooth headset in the Bluetooth headsets in the form of earbud pairs performs bidirectional data transmission with the data source device by means of a third wireless link based on the device group identifier.

Step 304: The wireless transceiving device group receives data of a data source from the data source device.

After the wireless transceiving device group 10 establishes a bidirectional connection with the data source device 20 by means of the device group identifier 103, the data source device 20 may transmit data 201 of the data source to the device group identifier 103 corresponding to the wireless transceiving device group 10, wherein it should be understood that the data 201 of the data source may be audio data, video data, text data, etc. In this embodiment, the specific form of the data of the data source is not limited. For example, when the wireless transceiving device is a Bluetooth audio device, the data of the data source may be audio data accordingly.

It should be understood that, in a possible realization method, the first wireless transceiving device 101 and the second wireless transceiving device 102 may obtain data by respectively monitoring the data 201 of the data source transmitted to the device group identifier 103 from the data source device 20.

The Bluetooth headsets in the form of earbud pairs may continue to be taken as an example for description. After the Bluetooth headsets in the form of earbud pairs establish a bidirectional connection with a smart terminal by means of a device group identifier, the smart terminal may transmit audio data to the device group identifier corresponding to the Bluetooth headsets in the form of earbud pairs. In a possible realization method, the first Bluetooth headsets and the second Bluetooth headsets may obtain data by respectively monitoring the audio data transmitted by the smart terminal to the device group identifier.

Further, in order that the two Bluetooth headsets of the Bluetooth headsets in the form of earbud pairs can perform synchronous audio play, a time label may be further set in the audio data so that the two Bluetooth headsets simultaneously play the same audio data according to the time label.

Step 305: The wireless transceiving devices in the wireless transceiving device group transmit data to the data source device.

After the wireless transceiving device group 10 receives the data 201 of the data source from the data source device 20, the wireless transceiving devices in the wireless transceiving device group 10, the first wireless transceiving device group 101 and the second wireless transceiving device group 102 for example, may further respectively transmit data 107 to the data source device 20.

Alternatively, the foregoing transmitted data 107 may include response data for reception success and response data for reception failure. For example, when a wireless transceiving device successfully receives the data 201 of the data source, it may return response data for reception success to the data source device 20, wherein successful response data may be Acknowledgement (ACK for short), while when the wireless transceiving device does not receive the data 201 of the data source successfully, response data for reception failure may be returned to the data source device 20, which may be Negative Acknowledgment (NACK for short). It should be noted that the wireless transceiving devices in the wireless transceiving device group 10 may further return other data to the data source device 20 according to the actual operating requirements, and the specific form of the data source device is not limited in this embodiment.

The Bluetooth headsets in the form of earbud pairs may continue to be taken as an example for description. When a Bluetooth headset in the Bluetooth headsets in the form of earbud pairs successfully receives audio data, response data for reception success may be returned to the smart terminal, while when the wireless transceiving device does not receive audio data successfully, response data for reception failure may be returned to the smart terminal. It should be noted that the wireless transceiving devices in the wireless transceiving device group 10 may further return other data to the data source device 20 according to the actual operating requirements, and the specific form of the data source device is not limited in this embodiment.

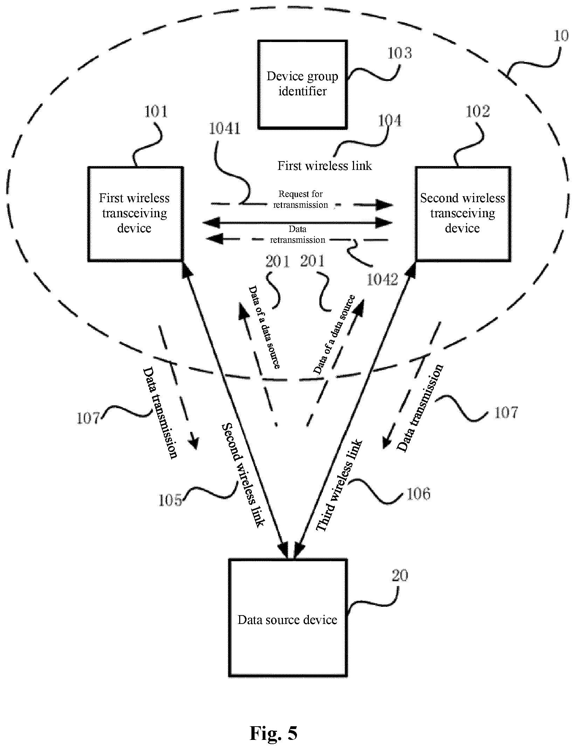

Fig. 5 is a schematic view of an alternative communication scenario of a wireless connection method provided by an exemplary embodiment of the present invention. As shown in Fig. 5, a wireless transceiving device in the wireless transceiving device group 10 may have the problem of data packet dropout, and once the time node of reception is missed, the data source device 20 will not retransmit the data 201 of the data source. In order to avoid data asymmetry of the wireless transceiving devices caused by data packet dropout of the wireless transceiving devices in the wireless transceiving device group 10, confirmation of data information in the group may be further conducted after the wireless transceiving device group 10 receives the data 201 of the data source. For example, confirmation of data information may be conducted for the first wireless transceiving device 101 and the second wireless transceiving device 102 in the wireless transceiving device group 10. The specific confirmation method, for example, may be to confirm whether the first wireless transceiving device 101 and the second wireless transceiving device 102 have the same number of data packets, while the specific confirmation method is not limited in this embodiment.

If the second wireless transceiving device 102 does not receive the data 201 of the data source successfully, the second wireless transceiving device 102 will initiate a retransmission request 1041 to the first wireless transceiving device 101 to cause the first wireless transceiving device 101 to determine according to a preset response rule whether to perform data retransmission 1042 to the second wireless transceiving device 102. Further, if the first wireless transceiving device 101 does not receive the data 201 of the data source successfully, likewise the first wireless transceiving device 101 may initiate a retransmission request to the second wireless transceiving device 102 to cause the second wireless transceiving device 102 to determine according to a preset response rule whether to retransmit the data of the data source to the first wireless transceiving device 101.

Further, the Bluetooth headsets in the form of earbud pairs may continue to be taken as an example for description. If the second Bluetooth headset does not receive audio data successfully, the second Bluetooth headset will initiate a retransmission request to the first Bluetooth headset to cause the first Bluetooth headset to determine according to a preset response rule whether to perform data retransmission to the second Bluetooth headset. Further, if the first Bluetooth headset does not receive audio data successfully, likewise the first Bluetooth headset may initiate a retransmission request to the second Bluetooth headset to cause the second Bluetooth headset to determine according to a preset response rule whether to retransmit audio data to the first Bluetooth headset.

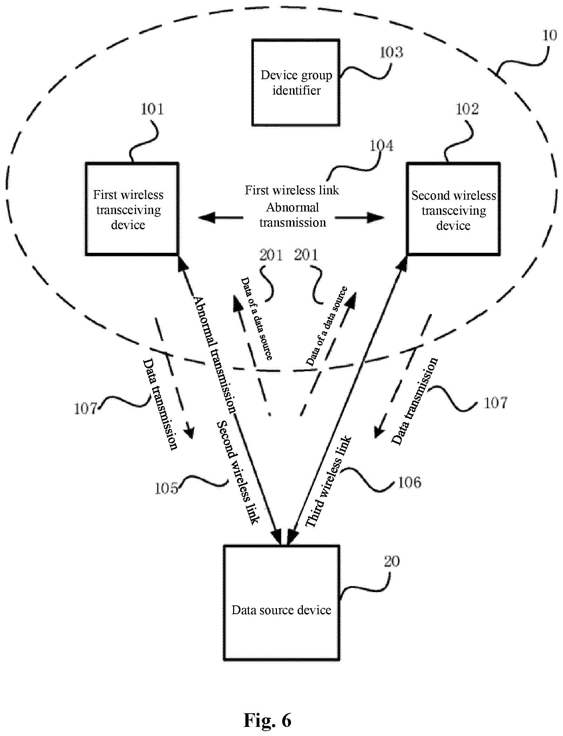

Fig. 6 is a schematic view of an alternative communication scenario of a wireless connection method provided by an exemplary embodiment of the present invention. As shown in Fig. 6, when a wireless transceiving device in the wireless transceiving device group 10 is abnormal, for example, the first wireless transceiving device 101 is faulty or powered down, the transmission between the first wireless transceiving device 101 and the data source device 20 is abnormal, and the transmission between the first wireless transceiving device 101 and the second wireless transceiving device 102 is also abnormal, but as the wireless transceiving devices in the wireless transceiving device group 10 are bidirectionally connected to the data source device 20 by means of a unified device group identifier 103, the wireless transceiving devices in the wireless transceiving device group 10 have an equal status, and When the connection of any wireless transceiving device in the group fails, the communication connection between other wireless transceiving devices in the group and the data source device 20 is not affected.

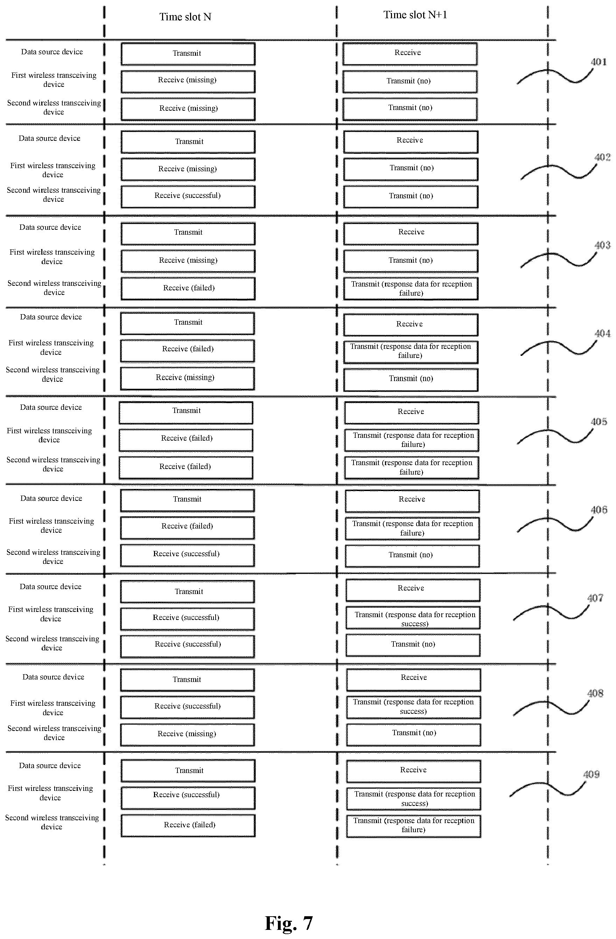

Fig. 7 is a schematic view of a time sequence of data transmission between a wireless transceiving device group and a data source device. As shown in Fig. 7, time slot N and time slot N+1 are two adjacent time slots, and between adjacent time slots, there is a data transceiving event. Please continue to refer to Fig. 4. A second wireless link 105 is used to realize bidirectional data transmission between the first wireless transceiving device 101 and the data source device 20. Likewise, a third wireless link 106 is used to realize bidirectional data transmission between the second wireless transceiving device 102 and the data source device 20.

For an event 401, at a time slot N, the first wireless transceiving device 101 and the second wireless transceiving device 102 both have missed the reception of data 201 of a data source, and at a time slot N+1, neither the first wireless transceiving device 101 nor the second wireless transceiving device 102 has fed back data to the data source device 20.

For an event 402, at a time slot N, the first wireless transceiving device 101 has missed the reception of data 201 of a data source, while the second wireless transceiving device 102 has successfully received the data 201 of the data source, and at a time slot N+1, neither the first wireless transceiving device 101 nor the second wireless transceiving device 102 has fed back data to the data source device 20.

For an event 403, at a time slot N, the first wireless transceiving device 101 has missed the reception of data 201 of a data source, while the second wireless transceiving device 102 has failed in receiving the data 201 of the data source, and at a time slot N+1, the first wireless transceiving device 101 has not fed back data to the data source device 20, while the second wireless transceiving device 102 has returned response data for reception failure to the data source device 20.

For an event 404, at a time slot N, the first wireless transceiving device 101 has failed in receiving data 201 of a data source, at a time slot N+1, the second wireless transceiving device 102 has missed the reception of the data 201 of the data source, and at the time slot N+1, the first wireless transceiving device 101 has returned response data for reception failure to the data source device 20, while the second wireless transceiving device 102 has not fed back data to the data source device 20.

For an event 405, at a time slot N, the first wireless transceiving device 101 and the second wireless transceiving device 102 both have failed in receiving data 201 of a data source, and at a time slot N+1, the first wireless transceiving device 101 and the second wireless transceiving device 102 both have returned response data for reception failure to the data source device 20.

For an event 406, at a time slot N, the first wireless transceiving device 101 has failed in receiving data 201 of a data source, while the second wireless transceiving device 102 has successfully received the data 201 of the data source, and at a time slot N+1, the first wireless transceiving device 101 has returned response data for reception failure to the data source device 20, while the second wireless transceiving device 102 has not fed back data to the data source device 20.

For an event 407, at a time slot N, the first wireless transceiving device 101 and the second wireless transceiving device 102 both have successfully received data 201 of a data source, and at a time slot N+1, the first wireless transceiving device 101 has returned response data for reception success to the data source device 20, while the second wireless transceiving device 102 has not fed back data to the data source device 20.

For an event 408, at a time slot N, the first wireless transceiving device 101 has successfully received data 201 of a data source, while the second wireless transceiving device 102 has failed in receiving the data 201 of the data source, and at a time slot N+1, the first wireless transceiving device 101 has returned response data for reception success to the data source device 20, while the second wireless transceiving device 102 has not fed back data to the data source device 20.

For an event 409, at a time slot N, the first wireless transceiving device 101 has successfully received data 201 of a data source, while the second wireless transceiving device 102 has failed in receiving data 201 of a data source, and at a time slot N+1, the first wireless transceiving device 101 has returned response data for reception success to the data source device 20, while the second wireless transceiving device 102 has returned response data for reception failure to the data source device 20.

Further, in order to raise the transmission efficiency of response data for reception failure, the transmitting power of the wireless transceiving devices in the wireless transceiving device group which do not successfully receive the data of the data source may be increased.

Further, in order to realize collaborative control between the wireless transceiving device group 10 and the data source device 20, after the wireless transceiving device group 10 establishes a bidirectional connection with the data source device 20 by means of the device group identifier 103, data control may be further synchronized between the wireless transceiving device group 10 and the data source device 20.

The Bluetooth headsets in the form of earbud pairs may continue to be taken as an example for description. The foregoing control data may be a play or pause instruction during play of a song, while when the user triggers a play or pause instruction on a smart terminal or Bluetooth headsets in the form of earbud pairs, data control may be synchronized between the Bluetooth headsets in the form of earbud pairs and the smart terminal, thereby realizing collaborative control between the Bluetooth headsets in the form of earbud pairs and the smart terminal.

In this embodiment, a wireless transceiving device group is established and configured with a device group identifier so that a bidirectional connection is established between an external data source device and the wireless transceiving device group by means of the device group identifier, and data of a data source can be synchronized with the wireless transceiving devices of the wireless transceiving device group by means of the bidirectional connection between the data source device and the wireless transceiving device group, thereby realizing data synchronization of the wireless transceiving devices in the wireless transceiving device group. Further, as the wireless transceiving devices in the wireless transceiving device group realize a bidirectional connection with the data source device by means of a unified device group identifier, the wireless transceiving devices in the wireless transceiving device group have the equal status. When the connection of any wireless transceiving device in the group fails, the communication connection between other wireless transceiving devices in the group and the data source device is not affected. Further, the power consumption of every wireless transceiving device can be more balanced.

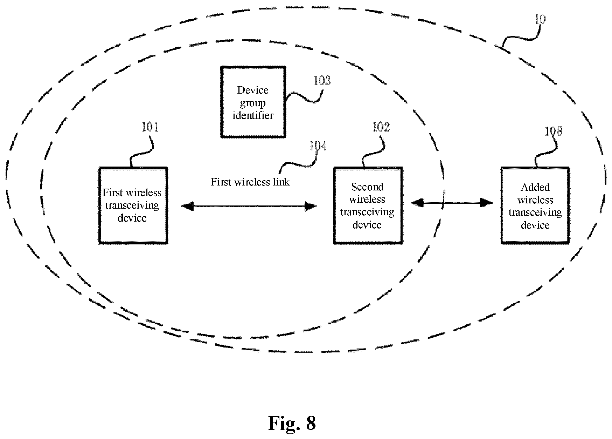

Fig. 8 is a schematic view of device extension of a wireless transceiving device group in a wireless connection method provided by an exemplary embodiment of the present invention. As shown in Fig. 8, based on the foregoing embodiment, in order that the wireless transceiving device group has better extendability in device quantity, for example, the wireless transceiving device group is conveniently extended from two wireless transceiving devices to more wireless transceiving devices, a mechanism of adding wireless transceiving devices to an established wireless transceiving device group may be set. Specifically, when the first wireless transceiving device 101 and the second wireless transceiving device 102 have constituted a wireless transceiving device group 10, and an added wireless transceiving device 108 establishes a communication connection with any one of the wireless transceiving devices in the wireless transceiving device group 10, then the device group identifier 103 is synchronized with the added wireless transceiving device 108, and the added wireless transceiving device 108 is added to the wireless transceiving device group 10. Specifically, after the added wireless transceiving device 108 and any wireless transceiving device in the wireless transceiving device group 10 are verified according to the preset conditions, for example a preset standard wireless protocol or a preset private protocol, a wireless transceiving device group 10 may be added and a device group identifier 103 is obtained.

Alternatively, the paired wireless transceiving devices in the wireless transceiving device group 10 may synchronize the device group identifier 103 with the added wireless transceiving device 108 by the method of broadcasting or a wireless connection link. For the foregoing wireless connection link, the method of Bluetooth, WIFI, etc. may be adopted, which is not limited in this embodiment.

In order to describe the extendability of the wireless connection method provided by this embodiment, a specific application scenario, such as a multi-person audio conference scenario, may be used for detailed description. In an office area within a certain range , a pair of Bluetooth headsets can be provided for every employee and all the Bluetooth headsets are used for the construction of a wireless transceiving device group to form an audio device group for conference, and then, by means of a smart terminal, a smart phone for example, the multi-person conference function may be realized through a smart terminal. Further, when a new Bluetooth headset needs to be added to the audio device group for conference, the new Bluetooth headset only needs to pass verification according to the preset conditions. It can be seen that the audio device group for conference also possesses the function of convenient device extension.

Please continue to refer to Fig. 1. This embodiment further provides a wireless transceiving device group 10, comprising: at least two wireless transceiving devices;

The wireless transceiving device group 10 establishes a bidirectional connection with a data source device by means of a device group identifier 103, the wireless transceiving device group 10 is configured with the device group identifier 103, and the device group identifier 103 is used to identify the wireless transceiving device group 10.

An embodiment of the present invention further provides a computer-readable storage medium, comprising: an instruction, which runs on a wireless transceiving device group provided by the foregoing embodiment and causes the wireless transceiving device group to implement any of the foregoing method embodiments.

The computer-readable medium includes a computer storage medium and a communication medium, wherein the communication medium includes any medium that facilitates the transmission of computer programs from one place to another place. The storage medium may be any usable medium that can be accessed by a general-purpose or special-purpose computer. An exemplary storage medium is coupled to a processor, so that the processor can read information from the storage medium and may write information into the storage medium. Of course, the storage medium may also be a part of a processor. The processor and the storage medium may be located in an application-specific integrated circuit (ASIC). Further, the ASIC may be located in user equipment. Of course, the processor and the storage medium may also exist in a communication device as discrete components.

## Claims

1. A wireless connection method, comprising:
establishing (302) a bidirectional connection between a wireless transceiving device group (10) and a data source device (20) using a device group identifier (103), the wireless transceiving device group (10) comprising at least two wireless transceiving devices (101,102), the group identifier (103) configured to identify the wireless transceiving device group (10);
connecting (301) two wireless transceiving devices (101,102) in the wireless transceiving device group (10) using a preset physical identifier, wherein the group identifier (103) and the physical identifier are used in a time-division manner according to a preset air interface protocol;
establishing (302) a first bidirectional connection between a first wireless transceiving device (101) in the wireless transceiving device group (10) and the data source device (20) using the group identifier (103); and
synchronizing (303), by the first wireless transceiving device (101), link information of the first bidirectional connection to a second wireless transceiving device (102) in the wireless transceiving device group (10) to cause the second wireless transceiving device to establish a second bidirectional connection with the data source device (20),
wherein the first and second wireless transceiving devices (101,102) each receive (304) data by monitoring data transmitted from the data source device (20) to the wireless transceiving device group (10) using the group identifier (103);
wherein the first and second wireless transceiving devices (101,102) confirm data in the transceiving device group (10);
wherein if the first wireless transceiving device (101) did not receive the data successfully, the first wireless transceiving device (101) sends a retransmission request to the second wireless transceiving device (102), and the second wireless transceiving device (102) determines according to a preset response rule whether to retransmit the data received from the data source device (20) to the first wireless transceiving device (101); and vice versa.

2. The wireless connection method according to claim 1, wherein before establishing a bidirectional connection between the wireless transceiving device group (10) and the data source device (20) using the device group identifier (103), the method further comprises:
pairing a plurality of wireless transceiving devices (101,102); and
configuring the device group identifier (103) for the wireless transceiving device group (10), preferably wherein the step of configuring the device group identifier (103) for the wireless transceiving device group (10) comprises:
configuring the device group identifier (103) for the wireless transceiving device group (10) according to a preset addressing rule.

3. The wireless connection method according to claim 2, wherein after the step of configuring the device group identifier (103) for the wireless transceiving device group (10), the method further comprises:
storing the device group identifier (103) by each wireless transceiving device in the wireless transceiving device group (10).

4. The wireless connection method according to claim 1 or claim 2, wherein after establishing the bidirectional connection between the wireless transceiving device group (10) and the data source device (20) using a device group identifier (103), the method further comprises:
paring a third wireless transceiving device with any one of the wireless transceiving devices (101,102) in the wireless transceiving device group (10); and
synchronizing, by the paired wireless transceiving devices, the group identifier (103) to the third wireless transceiving device add the third wireless transceiving device to the wireless transceiving device group (10).

5. The wireless connection method according to any of claim 1 or claim 2, wherein a connection between the wireless transceiving devices (101,102) in the wireless transceiving device group (10) is implemented by means of a wireless link (104, 105, 106), preferably wherein bidirectional or unidirectional data transmission between wireless transceiving devices in the wireless transceiving device group (10) is performed by means of the wireless link (104, 105, 106).

6. The wireless connection method according to claim 1 or claim 2, wherein after establishing the bidirectional connection between the wireless transceiving device group (10 and the data source device (20) using a device group identifier (103), the method further comprises:
receiving data from the data source device (20) by the wireless transceiving device group (10); and
transmitting data to the data source device (20) by the wireless transceiving device in the wireless transceiving device group (10), preferably wherein transmitting data to the data source device (20) by the wireless transceiving device in the wireless transceiving device group (10) comprises:
transmitting data to the data source device (20) in accordance with a preset feedback mode, more preferably wherein the transmitted data includes response data for successful reception or failed reception.

7. The wireless connection method of claim 1 or claim 2, further comprising increasing transmission power of a wireless transceiving device failing to receive the data in the wireless transceiving device group.

8. The wireless connection method of claim 1 or claim 2, wherein after the establishing the bidirectional between the wireless transceiving device group (10) and the data source device (20) using a device group identifier (103), the method further comprises:
controlling data synchronously between the wireless transceiving device group (10) and the data source device (20), preferably wherein the bidirectional connection is a bidirectional connection based on a Bluetooth protocol, more preferably wherein each wireless transceiving device is a Bluetooth audio device, and even more preferably wherein each Bluetooth audio device is a Bluetooth headset or a Bluetooth speaker.

9. A wireless transceiving device group (10), wherein the wireless transceiving device group (10) comprises at least two wireless transceiving devices (101,102) configured to perform a wireless connection method in accordance with any of claims 1-3.

10. The wireless transceiving device group (10) according to claim 9, wherein the wireless transceiving device group (10) further comprises a third wireless transceiving device; wherein
the third wireless transceiving device is configured to be paired with any wireless transceiving device (101,102) in the wireless transceiving device group (10), wherein the paired wireless transceiving devices are configured to synchronize the group identifier (103) to the third wireless transceiving device to add the third wireless transceiving device to the wireless transceiving device group (10).

11. The wireless transceiving device group (10) according to claim 9, wherein the wireless transceiving devices (101,102) in the wireless transceiving device group (10) are configured to be connected via a wireless link, preferably wherein the wireless transceiving devices (101,102) are configured to transmit data bidirectional or unidirectional data transmission via the wireless link.

12. The wireless transceiving device group (10) according to claim 9, wherein a first wireless transceiving device (101) in the wireless transceiving device group (10) is configured to establish a first bidirectional connection with the data source device (20) by means of the device group identifier (103).

13. The wireless transceiving device group (10) according to claim 9, wherein the wireless transceiving devices (101,102) in the wireless transceiving device group (10) are configured to receive data of a data source from the data source device (20); and
the wireless transceiving devices (101,102) in the wireless transceiving device group (10) are configured to transmit data to the data source device (20), preferably wherein the wireless transceiving devices (101,102) in the wireless transceiving device group (10) are configured to transmit data to the data source device (20) according to a preset feedback mode, more preferably wherein the transmitted data include response data for reception success and response data for reception failure.

14. The wireless transceiving device group (10) according to claim 9, wherein the wireless transceiving device group (10) and the data source device (20) are configured to control data synchronously.

15. The wireless transceiving device group (10) according to claim 12, wherein the bidirectional connection is a bidirectional connection based on a Bluetooth protocol, preferably wherein each wireless transceiving device is a Bluetooth audio device, more preferably wherein each Bluetooth audio device is a Bluetooth headset or a Bluetooth speaker.

16. A wireless transceiving system, wherein the wireless transceiving system comprises a data source device (20) and a wireless transceiving device group (10) in accordance with any of claims 9-15.

17. A computer-readable storage medium, comprising a computer program stored therein, wherein when the program is executed by a processor, the wireless connection method in any of claims 1 to 8 is realized.

## Patentansprüche

1. Drahtloses Verbindungsverfahren, umfassend:
Herstellen (302) einer bidirektionalen Verbindung zwischen einer Gruppe (10) drahtloser Sendeempfängervorrichtungen und einer Datenquellenvorrichtung (20) unter Verwendung einer Vorrichtungsgruppenkennung (103), wobei die Gruppe (10) drahtloser Sendeempfängervorrichtungen mindestens zwei drahtlose Sendeempfängervorrichtungen (101, 102) umfasst, wobei die Gruppenkennung (103) dazu konfiguriert ist, die Gruppe (10) drahtloser Sendeempfängervorrichtungen zu identifizieren;
Verbinden (301) zweier drahtloser Sendeempfängervorrichtungen (101, 102) in der Gruppe (10) drahtloser Sendeempfängervorrichtungen unter Verwendung einer voreingestellten physikalischen Kennung, wobei die Gruppenkennung (103) und die physikalische Kennung auf Zeitmultiplexweise entsprechend einem voreingestellten Schnittstellenprotokoll verwendet werden;
Herstellen (302) einer ersten bidirektionalen Verbindung zwischen einer ersten drahtlosen Sendeempfängervorrichtung (101) in der Gruppe (10) drahtloser Sendeempfängervorrichtungen und der Datenquellenvorrichtung (20) unter Verwendung der Gruppenkennung (103); und
Synchronisieren (303) von Verknüpfungsinformationen der ersten bidirektionalen Verbindung mit einer zweiten drahtlosen Sendeempfängervorrichtung (102) in der Gruppe (10) drahtloser Sendeempfängervorrichtungen durch die erste drahtlose Sendeempfängervorrichtung (101), um die zweite drahtlose Sendeempfängervorrichtung dazu zu veranlassen, eine zweite bidirektionale Verbindung mit der Datenquellenvorrichtung (20) herzustellen,
wobei die erste und zweite drahtlose Sendeempfängervorrichtung (101, 102) jeweils Daten empfangen (304), indem sie Daten überwachen, die unter Verwendung der Gruppenkennung (103) von der Datenquellenvorrichtung (20) an die Gruppe (10) drahtloser Sendeempfängervorrichtungen übertragen werden;
wobei die erste und zweite drahtlose Sendeempfängervorrichtung (101, 102) Daten in der Sendeempfängervorrichtungsgruppe (10) bestätigen;
wobei, wenn die erste drahtlose Sendeempfängervorrichtung (101) die Daten nicht erfolgreich empfangen hat, die erste drahtlose Sendeempfängervorrichtung (101) eine Neuübertragungsanforderung an die zweite drahtlose Sendeempfängervorrichtung (102) sendet und die zweite drahtlose Sendeempfängervorrichtung (102) entsprechend einer voreingestellten Antwortregel bestimmt, ob die von der Datenquellenvorrichtung (20) empfangenen Daten erneut an die erste drahtlose Sendeempfängervorrichtung (101) zu übertragen sind; und umgekehrt.

2. Drahtloses Verbindungsverfahren nach Anspruch 1, wobei das Verfahren vor dem Herstellen einer bidirektionalen Verbindung zwischen der Gruppe (10) drahtloser Sendeempfängervorrichtungen und der Datenquellenvorrichtung (20) unter Verwendung der Vorrichtungsgruppenkennung (103) ferner Folgendes umfasst:
Koppeln einer Vielzahl von drahtlosen Sendeempfängervorrichtungen (101,102); und
Konfigurieren der Vorrichtungsgruppenkennung (103) für die Gruppe (10) drahtloser Sendeempfängervorrichtungen, wobei der Schritt des Konfigurierens der Vorrichtungsgruppenkennung (103) für die Gruppe (10) drahtloser Sendeempfängervorrichtungen vorzugsweise Folgendes umfasst:
Konfigurieren der Vorrichtungsgruppenkennung (103) für die Gruppe (10) drahtloser Sendeempfängervorrichtungen entsprechend einer voreingestellten Adressierungsregel.

3. Drahtloses Verbindungsverfahren nach Anspruch 2, wobei das Verfahren nach dem Schritt des Konfigurierens der Vorrichtungsgruppenkennung (103) für die Gruppe (10) drahtloser Sendeempfängervorrichtungen ferner Folgendes umfasst:
Speichern der Vorrichtungsgruppenkennung (103) durch jede drahtlose Sendeempfängervorrichtung in der Gruppe (10) drahtloser Sendeempfängervorrichtungen.

4. Drahtloses Verbindungsverfahren nach Anspruch 1 oder Anspruch 2, wobei das Verfahren nach dem Herstellen der bidirektionalen Verbindung zwischen der Gruppe (10) drahtloser Sendeempfängervorrichtungen und der Datenquellenvorrichtung (20) unter Verwendung einer Vorrichtungsgruppenkennung (103) ferner Folgendes umfasst:
Koppeln einer dritten drahtlosen Sendeempfängervorrichtung mit einer beliebigen der drahtlosen Sendeempfängervorrichtungen (101, 102) in der Gruppe (10) drahtloser Sendeempfängervorrichtungen; und
Synchronisieren der Gruppenkennung (103) mit der dritten drahtlosen Sendeempfängervorrichtung durch die gekoppelten drahtlosen Sendeempfängervorrichtungen, Hinzufügen der dritten drahtlosen Sendeempfängervorrichtung zu der Gruppe (10) drahtloser Sendeempfängervorrichtungen.

5. Drahtloses Verbindungsverfahren nach einem der Ansprüche 1 oder Anspruch 2, wobei eine Verbindung zwischen den drahtlosen Sendeempfängervorrichtungen (101, 102) in der Gruppe (10) drahtloser Sendeempfängervorrichtung mittels einer drahtlosen Verknüpfung (104, 105, 106) implementiert wird, wobei eine bidirektionale oder unidirektionale Datenübertragung zwischen drahtlosen Sendeempfängervorrichtungen in der Gruppe (10) drahtloser Sendeempfängervorrichtung vorzugsweise mittels der drahtlosen Verknüpfung (104, 105, 106) durchgeführt wird.

6. Drahtloses Verbindungsverfahren nach Anspruch 1 oder Anspruch 2, wobei das Verfahren nach dem Herstellen der bidirektionalen Verbindung zwischen der Gruppe (10) drahtloser Sendeempfängervorrichtungen und der Datenquellenvorrichtung (20) unter Verwendung einer Vorrichtungsgruppenkennung (103) ferner Folgendes umfasst:
Empfangen von Daten von der Datenquellenvorrichtung (20) durch die Gruppe (10) drahtloser Sendeempfängervorrichtungen; und
Übertragen von Daten an die Datenquellenvorrichtung (20) durch die drahtlose Sendeempfängervorrichtung in der Gruppe (10) drahtloser Sendeempfängervorrichtungen, wobei das Übertragen von Daten an die Datenquellenvorrichtung (20) durch die drahtlose Sendeempfängervorrichtung in der Gruppe (10) drahtloser Sendeempfängervorrichtungen vorzugsweise Folgendes umfasst:
Übertragen von Daten an die Datenquellenvorrichtung (20) entsprechend einem voreingestellten Feedback-Modus, wobei die übertragenen Daten vorzugsweise Antwortdaten für einen erfolgreichen Empfang oder fehlgeschlagenen Empfang beinhalten.

7. Drahtloses Verbindungsverfahren nach Anspruch 1 oder Anspruch 2, ferner umfassend Erhöhen einer Übertragungsleistung einer drahtlosen Sendeempfängervorrichtung, welche die Daten in der Gruppe drahtloser Sendeempfängervorrichtung nicht empfangen kann.

8. Drahtloses Verbindungsverfahren nach Anspruch 1 oder Anspruch 2, wobei das Verfahren nach dem Herstellen der bidirektionalen zwischen der Gruppe (10) drahtloser Sendeempfängervorrichtungen und der Datenquellenvorrichtung (20) unter Verwendung einer Vorrichtungsgruppenkennung (103) ferner Folgendes umfasst:
Synchrones Steuern von Daten zwischen der Gruppe (10) drahtloser Sendeempfängervorrichtungen und der Datenquellenvorrichtung (20), wobei die bidirektionale Verbindung vorzugsweise eine bidirektionale Verbindung auf Grundlage eines Bluetooth-Protokolls ist, wobei jede drahtlose Sendeempfängervorrichtung noch bevorzugter eine Bluetooth-Audiovorrichtung ist und jede Bluetooth-Audiovorrichtung sogar noch bevorzugter ein Bluetooth-Headset oder ein Bluetooth-Lautsprecher ist.

9. Gruppe (10) drahtloser Sendeempfängervorrichtungen, wobei die Gruppe (10) drahtloser Sendeempfängervorrichtungen mindestens zwei drahtlose Sendeempfängervorrichtungen (101, 102) umfasst, die zum Durchführen eines drahtlosen Verbindungsverfahrens nach einem der Ansprüche 1-3 konfiguriert sind.

10. Gruppe (10) drahtloser Sendeempfängervorrichtungen nach Anspruch 9, wobei die Gruppe (10) drahtloser Sendeempfängervorrichtungen ferner eine dritte drahtlose Sendeempfängervorrichtung umfasst; wobei
die dritte drahtlose Sendeempfängervorrichtung dazu konfiguriert ist, mit einer beliebigen drahtlosen Sendeempfängervorrichtung (101, 102) in der Gruppe (10) drahtloser Sendeempfängervorrichtungen gekoppelt zu werden, wobei die gekoppelten drahtlosen Sendeempfängervorrichtungen dazu konfiguriert sind, die Gruppenkennung (103) mit der dritten drahtlosen Sendeempfängervorrichtung zu synchronisieren, um die dritte drahtlose Sendeempfängervorrichtung zu der Gruppe (10) drahtloser Sendeempfängervorrichtungen hinzuzufügen.

11. Gruppe (10) drahtloser Sendeempfängervorrichtungen nach Anspruch 9, wobei die drahtlosen Sendeempfängervorrichtungen (101, 102) in der Gruppe (10) drahtloser Sendeempfängervorrichtungen dazu konfiguriert sind, über eine drahtlose Verknüpfung verbunden zu werden, wobei die drahtlosen Sendeempfängervorrichtungen (101, 102) vorzugsweise dazu konfiguriert sind, Daten bidirektional oder unidirektional über die drahtlose Verknüpfung zu übertragen.

12. Gruppe (10) drahtloser Sendeempfängervorrichtungen nach Anspruch 9, wobei eine erste drahtlose Sendeempfängervorrichtung (101) in der Gruppe (10) drahtloser Sendeempfängervorrichtungen dazu konfiguriert ist, mittels der Vorrichtungsgruppenkennung (103) eine erste bidirektionale Verbindung mit der Datenquellenvorrichtung (20) herzustellen.

13. Gruppe (10) drahtloser Sendeempfängervorrichtungen nach Anspruch 9, wobei die drahtlosen Sendeempfängervorrichtungen (101, 102) in der Gruppe (10) drahtloser Sendeempfängervorrichtungen dazu konfiguriert sind, Daten einer Datenquelle von der Datenquellenvorrichtung (20) zu empfangen; und
die drahtlosen Sendeempfängervorrichtungen (101, 102) in der Gruppe (10) drahtloser Sendeempfängervorrichtungen dazu konfiguriert sind, Daten an die Datenquellenvorrichtung (20) zu übertragen, wobei die drahtlosen Sendeempfängervorrichtungen (101, 102) in der Gruppe (10) drahtloser Sendeempfängervorrichtungen vorzugsweise dazu konfiguriert sind, Daten entsprechend einem voreingestellten Feedback-Modus an die Datenquellenvorrichtung (20) zu übertragen, wobei die übertragenen Daten vorzugsweise Antwortdaten für einen erfolgreichen Empfang und Antwortdaten für einen fehlgeschlagenen Empfang beinhalten.

14. Gruppe (10) drahtloser Sendeempfängervorrichtungen nach Anspruch 9, wobei die Gruppe (10) drahtloser Sendeempfängervorrichtungen und die Datenquellenvorrichtungen (20) dazu konfiguriert sind, Daten synchron zu steuern.

15. Gruppe (10) drahtloser Sendeempfängervorrichtungen nach Anspruch 12, wobei die bidirektionale Verbindung eine bidirektionale Verbindung auf Grundlage eines Bluetooth-Protokolls ist, wobei jede drahtlose Sendeempfängervorrichtung vorzugsweise eine Bluetooth-Audiovorrichtung ist, wobei jede Bluetooth-Audiovorrichtung noch bevorzugter ein Bluetooth-Headset oder ein Bluetooth-Lautsprecher ist.

16. Drahtloses Sendeempfängersystem, wobei das drahtlose Sendeempfängersystem eine Datenquellenvorrichtung (20) und eine Gruppe (10) drahtloser Sendeempfängervorrichtungen nach einem der Ansprüche 9-15 umfasst.

17. Computerlesbares Speichermedium, umfassend ein darin gespeichertes Computerprogramm, wobei, wenn das Programm durch einen Prozessor ausgeführt wird, das drahtlose Verbindungsverfahren nach einem der Ansprüche 1 bis 8 umgesetzt wird.

## Revendications

1. Procédé de connexion sans fil, comprenant : l'établissement (302) d'une connexion bidirectionnelle entre un groupe (10) de dispositifs d'émission-réception sans fil et un dispositif source de données (20) à l'aide d'un identifiant (103) de groupe de dispositifs, le groupe (10) de dispositifs d'émission-réception sans fil comprenant au moins deux dispositifs d'émission-réception sans fil (101,102), l'identifiant (103) de groupe étant configuré pour identifier le groupe (10) de dispositifs d'émission-réception sans fil ;
la connexion (301)
de deux dispositifs d'émission-réception sans fil (101,102) dans le groupe (10) de dispositifs d'émission-réception sans fil à l'aide d'un identifiant physique prédéfini, ledit identifiant (103) de groupe et ledit identifiant physique étant utilisés d'une manière répartie dans le temps selon un protocole d'interface radio prédéfini ;
l'établissement (302)
d'une première connexion bidirectionnelle entre un premier dispositif d'émission-réception sans fil
(101) dans le groupe (10) de dispositifs d'émission-réception sans fil et ledit dispositif source de données (20) à l'aide de l'identifiant (103) de groupe ; et
la synchronisation (303),
par le premier dispositif d'émission-réception sans fil (101), des informations de liaison de la première connexion bidirectionnelle avec un deuxième dispositif d'émission-réception sans fil (102) dans le groupe (10) de dispositifs d'émission-réception sans fil pour amener le deuxième dispositif d'émission-réception sans fil à établir une seconde connexion bidirectionnelle avec le dispositif source de données (20),
lesdits premier et deuxième dispositifs d'émission-réception sans fil (101,102) recevant chacun (304) des données en surveillant des données transmises
du dispositif source de données (20) au groupe
(10) de dispositifs d'émission-réception sans fil à l'aide de l'identifiant (103) de groupe ;
lesdits premier et deuxième dispositifs d'émission-réception sans fil (101,102) confirmant des données dans le groupe (10) de dispositifs d'émission-réception ;
si le premier dispositif d'émission-réception sans fil (101) n'a pas reçu les données avec succès, ledit premier dispositif d'émission-réception sans fil (101) envoyant une demande de retransmission au deuxième dispositif d'émission-réception sans fil (102), et ledit deuxième dispositif d'émission-réception sans fil (102) déterminant selon une règle de réponse prédéfinie si les
données reçues doivent être retransmises à partir du dispositif source de données (20) vers le premier dispositif d'émission-réception sans fil (101) ; et vice versa.

2. Procédé de connexion sans fil selon la revendication 1, avant d'établir une connexion bidirectionnelle entre le groupe (10) de dispositifs d'émission-réception sans fil et le dispositif source de données (20) à l'aide de l'identifiant (103) de groupe de dispositifs, ledit procédé comprenant en outre :
l'appairage d'une pluralité de dispositifs d'émission-réception sans fil (101,102) ; et
la configuration de l'identifiant (103) de groupe de dispositifs pour le groupe (10) de dispositifs d'émission-réception sans fil, de préférence ladite étape de configuration de l'identifiant (103) de groupe de dispositifs pour le groupe (10) de dispositifs d'émission-réception sans fil comprenant : la configuration de l'identifiant (103) de groupe de dispositifs pour le groupe (10) de dispositifs d'émission-réception sans fil selon une règle d'adressage prédéfinie.

3. Procédé de connexion sans fil selon la revendication 2, après l'étape de configuration de l'identifiant (103) de groupe de dispositifs pour le groupe (10) de dispositifs d'émission-réception sans fil, ledit procédé comprenant en outre :
le stockage de l'identifiant (103) de groupe de dispositifs par chaque dispositif d'émission-réception sans fil dans le groupe (10) de dispositifs d'émission-réception sans fil.

4. Procédé de connexion sans fil selon la revendication 1 ou la revendication 2, après avoir établi la connexion bidirectionnelle entre le groupe (10) de dispositifs d'émission-réception sans fil et le dispositif source de données (20) à l'aide d'un identifiant (103) de groupe de dispositifs, ledit procédé comprenant en outre :
l'appairage d'un troisième dispositif d'émission-réception sans fil à l'un quelconque des dispositifs d'émission-réception sans fil (101,102) dans le groupe (10) de dispositifs d'émission-réception sans fil ; et
la synchronisation, par les dispositifs d'émission-réception sans fil appariés, de l'identifiant (103) de groupe avec le
troisième dispositif d'émission-réception sans fil ajoutant le troisième dispositif d'émission-réception sans fil au groupe (10) de dispositifs d'émission-réception sans fil.

5. Procédé de connexion sans fil selon l'une quelconque de la revendication 1 ou de la revendication 2, une connexion entre les dispositifs d'émission-réception sans fil (101,102) dans le groupe (10) de dispositifs d'émission-réception sans fil étant mise en oeuvre au moyen d'une liaison sans fil (104, 105, 106), de préférence, ladite transmission de données bidirectionnelle ou unidirectionnelle entre des dispositifs d'émission-réception sans fil du groupe (10) de dispositifs d'émission-réception sans fil étant effectuée au moyen de la liaison sans fil (104, 105, 106).

6. Procédé de connexion sans fil selon la revendication 1 ou la revendication 2, après avoir établi la connexion bidirectionnelle entre le groupe (10) de dispositifs d'émission-réception sans fil et le dispositif source de données (20) à l'aide d'un identifiant (103) de groupe de dispositifs, ledit procédé comprenant en outre :
la réception de données en provenance du dispositif source de données (20) par le groupe (10) de dispositifs d'émission-réception sans fil ; et
la transmission de données au dispositif source de données (20) par le dispositif d'émission-réception sans fil dans le groupe (10) de dispositifs d'émission-réception sans fil, de préférence ladite transmission de données au dispositif source de données (20) par le dispositif d'émission-réception sans fil dans le groupe (10) de dispositifs d'émission-réception sans fil comprenant :
la transmission de données au dispositif source de données (20) conformément à un mode de rétroaction prédéfini, mieux encore lesdites données transmises comprenant des données de réponse pour une réception réussie ou un échec de réception.

7. Procédé de connexion sans fil selon la revendication 1 ou la revendication 2, comprenant en outre l'augmentation de la puissance de transmission d'un dispositif d'émission-réception sans fil qui ne parvient pas à recevoir les données dans le groupe de dispositifs d'émission-réception sans fil.

8. Procédé de connexion sans fil selon la revendication 1 ou la revendication 2, après l'établissement de la bidirectionnelle entre le groupe (10) de dispositifs d'émission-réception sans fil et le dispositif source de données (20) à l'aide d'un identifiant (103) de groupe de dispositifs, ledit procédé comprenant en outre :
la commande de données de manière synchrone
entre le groupe (10) de dispositifs d'émission-réception sans fil et le dispositif source de données (20), de préférence ladite connexion bidirectionnelle étant une connexion bidirectionnelle basée sur un protocole Bluetooth, mieux encore chaque dispositif d'émission-réception sans fil étant un dispositif audio Bluetooth, et idéalement, chaque dispositif audio Bluetooth étant un casque Bluetooth ou un haut-parleur Bluetooth.

9. Groupe (10) de dispositifs d'émission-réception sans fil, ledit groupe (10) de dispositifs d'émission-réception sans fil comprenant au moins deux dispositifs d'émission-réception sans fil (101,102) configurés pour effectuer un procédé de connexion sans fil conformément à l'une quelconque des revendications 1-3.

10. Groupe (10) de dispositifs d'émission-réception sans fil selon la revendication 9, ledit groupe (10) de dispositifs d'émission-réception sans fil comprenant en outre un troisième dispositif d'émission-réception sans fil ;
ledit troisième dispositif d'émission-réception sans fil étant configuré pour être appairé à n'importe quel dispositif d'émission-réception sans fil
(101,102) dans le groupe (10) de dispositifs d'émission-réception sans fil, lesdits dispositifs d'émission-réception sans fil appairés étant configurés pour synchroniser l'identifiant (103) de groupe avec le troisième dispositif d'émission-réception sans fil afin d'ajouter le troisième dispositif d'émission-réception sans fil au groupe (10) de dispositifs d'émission-réception sans fil.

11. Groupe (10) de dispositifs d'émission-réception sans fil selon la revendication 9, lesdits dispositifs d'émission-réception sans fil (101,102) dans le groupe (10) de dispositifs d'émission-réception sans fil étant configurés pour être connectés par l'intermédiaire d'une liaison sans fil, de préférence lesdits dispositifs d'émission-réception sans fil (101,102) étant configurés pour transmettre des données
par transmission de données bidirectionnelle ou unidirectionnelle par l'intermédiaire de la liaison sans fil.

12. Groupe (10) de dispositifs d'émission-réception sans fil selon la revendication 9, un premier
dispositif d'émission-réception sans fil (101) dans le groupe (10) de dispositifs d'émission-réception sans fil étant configuré pour établir une première
connexion bidirectionnelle avec le dispositif source de données (20) au moyen de l'identifiant (103) de groupe de dispositifs.

13. Groupe (10) de dispositifs d'émission-réception sans fil selon la revendication 9, lesdits dispositifs d'émission-réception sans fil (101,102) dans le groupe (10) de dispositifs d'émission-réception sans fil étant configurés pour recevoir des données
d'une source de données en provenance du dispositif source de données (20) ; et
lesdits dispositifs d'émission-réception sans fil (101,102) dans le groupe (10) de dispositifs d'émission-réception sans fil
étant configurés pour transmettre des données au dispositif source de données (20), de préférence lesdits dispositifs d'émission-réception sans fil (101,102) du groupe (10) de dispositifs d'émission-réception sans fil étant configurés pour transmettre des données au dispositif source de données (20) selon un mode de rétroaction prédéfini, mieux encore lesdites données transmises comprenant des données de réponse pour le succès de la réception et des données de réponse pour l'échec de la réception.

14. Groupe (10) de dispositifs d'émission-réception sans fil selon la revendication 9, ledit groupe (10) de dispositifs d'émission-réception sans fil et ledit dispositif source de données (20) étant configurés pour commander des données de manière synchrone.

15. Groupe (10) de dispositifs d'émission-réception sans fil selon la revendication 12, ladite connexion bidirectionnelle étant une connexion bidirectionnelle sur la base d'un protocole Bluetooth, de préférence chaque dispositif d'émission-réception sans fil étant un dispositif audio Bluetooth, mieux encore chaque dispositif audio Bluetooth
étant un casque Bluetooth ou un haut-parleur Bluetooth.

16. Système d'émission-réception sans fil, ledit système d'émission-réception sans fil comprenant un dispositif source de données (20) et un groupe (10) de dispositifs d'émission-réception sans fil conformément à l'une quelconque des revendications 9-15.

17. Support de stockage lisible par ordinateur, comprenant un programme informatique stocké dans celui-ci, lorsque le programme est exécuté par un processeur, ledit procédé de connexion sans fil selon l'une quelconque des revendications 1 à 8 étant réalisé.
